(19) Europäisches Patentamt / European Patent Office / Office européen des brevets

(11) **EP 3 686 848 A1**

(12) # EUROPEAN PATENT APPLICATION


(43) Date of publication:
**29.07.2020 Bulletin 2020/31**

(51) Int Cl.:
*G06T 11/00* (2006.01) *G06T 11/60* (2006.01)

(21) Application number: **19217022.3**

(22) Date of filing: **17.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2019 US 201916258322**



(71) Applicant: **Nvidia Corporation**
**Santa Clara, CA 95050 (US)**

(72) Inventors:
- **PARK, Taesung**
**Albany, CA 94706 (US)**
- **LIU, Ming-Yu**
**Santa Clara, CA 95050 (US)**
- **WANG, Ting-Chun**
**Santa Clara, CA 95050 (US)**
- **ZHU, Junyan**
**Cambridge, MA 02142 (US)**

(74) Representative: **Kraus & Weisert**
**Patentanwälte PartGmbB**
**Thomas-Wimmer-Ring 15**
**80539 München (DE)**


(54) **SEMANTIC IMAGE SYNTHESIS FOR GENERATING SUBSTANTIALLY PHOTOREALISTIC IMAGES USING NEURAL NETWORKS**


(57) A user can create a basic semantic layout that includes two or more regions identified by the user, each region being associated with a semantic label indicating a type of object(s) to be rendered in that region. The semantic layout can be provided as input to an image synthesis network. The network can be a trained machine learning network, such as a generative adversarial network (GAN), that includes a conditional, spatially-adaptive normalization layer for propagating semantic information from the semantic layout to other layers of the network. The synthesis can involve both normalization and de-normalization, where each region of the layout can utilize different normalization parameter values. An image is inferred from the network, and rendered for display to the user. The user can change labels or regions in order to cause a new or updated image to be generated.


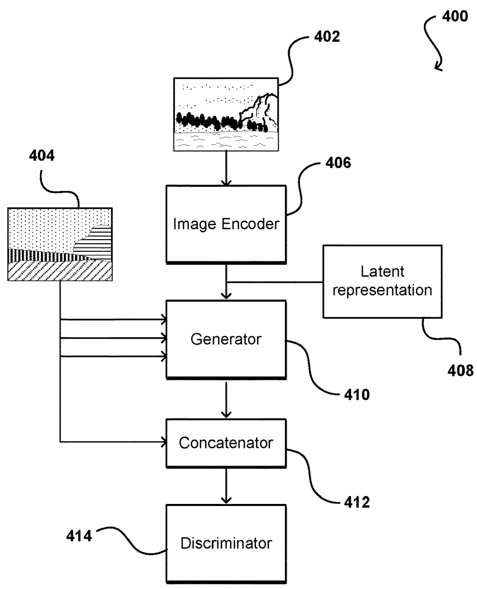


FIG. 4

EP 3 686 848 A1


Printed by Jouve, 75001 PARIS (FR)

## Description

BACKGROUND

Various software applications exist that enable users to manually create or manipulate digital images. If the user wishes to create a photorealistic image, the user typically has to locate images including representations of the individual components of interest and then cut and paste those images together in a way that makes the image appear as desired. This can involve a painstaking cropping process in some embodiments, including a significant amount of effort in getting image portions aligned and sized properly, as well as removing image artifacts and blending the individual components together seamlessly. While some software packages offer tools to help lessen the user effort needed for at least some of these steps, the process still involves significant manual interaction and may be too complicated for many users.

BRIEF DESCRIPTION OF THE DRAWINGS

Various embodiments in accordance with the present disclosure will be described with reference to the drawings, in which:

FIGS. 1A and 1B illustrate an example semantic layout and corresponding synthesized image that can be generated in accordance with various embodiments.

FIGS. 2A, 2B, 2C, and 2D illustrate a set of example semantic layouts and corresponding synthesized images that can be generated in accordance with various embodiments.

FIG. 3 illustrates an example user interface that can be utilized to generate a semantic layout in accordance with various embodiments.

FIG. 4 illustrates components of an example image synthesizer network that can be utilized in accordance with various embodiments.

FIG. 5 illustrates an example process for obtaining a semantic layout and synthesizing a corresponding photorealistic image in accordance with various embodiments.

FIG. 6 illustrates an example environment in which aspects of the various embodiments can be implemented.

FIG. 7 illustrates an example system for training an image synthesis network that can be utilized in accordance with various embodiments.

FIG. 8 illustrates layers of an example statistical model that can be utilized in accordance with various embodiments.

FIG. 9 illustrates example components of a computing device that can be used to implement aspects of the various embodiments.

DETAILED DESCRIPTION

In the following description, various embodiments will be described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

Approaches in accordance with various embodiments provide for the generation of images, such as photorealistic images, using semantic layouts. A user can utilize a layout generation application, for example, to draw or create a simple semantic layout. The semantic layout will include two or more regions identified by the user, such as through the input of region boundaries. The user can also associate a semantic label (or other identifier) with each region, to indicate a type of object(s) to be rendered in that region. For example, a user wanting to generate a photorealistic image of an outdoor scene might associate a lower region in the image space with a "grass" label and a upper region with a "sky" label. Once generated, the semantic layout can be provided as input to an image synthesis network. The network can be a trained machine learning network, such as a generative adversarial network (GAN). The network can include a conditional, spatially-adaptive normalization layer for propagating semantic information from the semantic layout to other layers of the trained network. The conditional normalization layer can be tailored for semantic image synthesis. Further, the synthesizing can involve both normalization and de-normalization, where each region can utilize different normalization parameter values. An image can then be inferred from the network, and rendered for display to the user. The user can change labels or regions in order to cause a new or updated image to be generated. Such an approach can enable users to become great artists, as the can draw or create a set of very basic elements or shapes, and select a style for each region. An image can then be synthesized based on the resulting semantic layout.

Various other functions can be implemented within the various embodiments as well as discussed and suggested elsewhere herein.

It might be the case that a user wishes to be able to generate a photorealistic image of a particular scene, which may correspond to an actual scene or a scene from the user's imagination, among other such options. Some software applications enable a user to digitally paint, draw, or otherwise create random images, but it can be extremely difficult using such an approach to generate a photorealistic image. As mentioned, users have the option of locating images including objects of interest to be placed in the image of the scene, but then have to manually cut out those objects and paste them into a scene in a way that looks natural and does not include any significant image manipulation artifacts. Such an approach can require significant manual effort on the part of the user, and oftentimes will not result in an image that is truly photorealistic.

Accordingly, approaches in accordance with various embodiments enable a user to quickly and easily create images using semantic layouts. These layouts can correspond to regions of an image that are to include specified types of objects, features, patterns, or textures. FIG. 1A illustrates an example semantic layout 100 that can be created in accordance with various embodiments. In this example, a user interface can provide a new or blank image space, such as may correspond to an all-white image of a specific size or resolution. Through the user interface or application, the user can draw or otherwise create a shape for one or more regions of the layout that are to contain representations of different types of objects, for example. A user can draw a region boundary using any of a number of input approaches as discussed in more detail elsewhere herein, as may include moving a finger along a touch-sensitive display screen or moving a mouse cursor along an intended path using a drawing tool of the interface, among other such options.

In the example of FIG. 1A, the user has drawn boundaries that define four distinct regions 102, 104, 106, 108. For each of these regions, a user has designated, selected, or otherwise caused a label to be assigned or associated. Approaches for assigning such labels are discussed in more detail elsewhere herein. In this example, the user has selected a sky label for a first region 102, a forest label for a second region 104, a water or sea label for a third region 106, and a rock or mountain label for a fourth region. In this example interface, the different labels are associated with different color, such that a user can quickly and easily determine from viewing the image which regions correspond to which types of objects. The user can then change the labels associated with a given region if desired. The image once created forms a type of segmentation mask, where the shape and size of each region can be thought of as a mask that enables a specified type of object to be rendered only within the respective mask region or boundaries. Because the regions are associated with labels or other designations for types of objects, this segmentation mask can also be thought of as a semantic layout, as it provides context for the types of objects in each of the different masked or bounded regions.

Once the user has generated a semantic layout that the user would like to convert into a photorealistic image, for example, the user can select an option to cause the semantic layout to be provided to an image rendering or generation process. In some embodiments a photorealistic image might be generated or updated automatically with each change to a semantic layout, among other such options. An example image generation or synthesis process can take the semantic layout as input and generate a photorealistic image (or a stylized, synthesized image, for example) such as the example image 150 illustrated in FIG. 1B. In this example, the image synthesis process has generating renderings of the specified types of object in the regions indicated by the boundaries of the semantic layout. The image can be generated and synthesized in such a way that the scene appears as an image of an actual scene, without image manipulation artifacts or other such undesirable features. Further, the individual components of the image are determined using a trained image synthesis network and generated from the output of the network, and are not pastings or aggregations of portions of images of those types of objects, which can provide for seamless boundaries between regions, among other such advantages.

In some embodiments, a user may have an ability to specify specific objects of a given type, while in others an initial object might be chosen and the user can have the ability to modify the object rendered for the region. For example, a user might select a label for a region that corresponds to an object type of "tree." In some embodiments a user might be able to specify a specific tree, such as a pine tree or palm tree. In other embodiments a type of tree might be selected at random, or from specified user preferences or observed behaviors, and the user can have the option of requesting a different tree, such as by cycling through available options. In still other embodiments a user might be able to specify a style type or scene type for the image, which may determine the object selected for rendering. For example, if the user specifies a beach scene or tropical style then a palm tree might be selected for a tree label region, while for a forest or mountain style a pine tree might be selected, among other such options. Once an acceptable image is generated, the user can cause that image to be saved, exported, or otherwise utilized for its intended purpose.

As mentioned, the user can have the ability to modify the semantic layout during the image creation or manipulation process. For example, as illustrated in the example layout 200 of FIG. 2A, the user can draw a different boundary 202 for a given region, which can cause the region to have a new shape 222 corresponding to the boundary, as illustrated in the example image of FIG. 2B. The updating of the semantic layout can trigger a new image 240 to be generated, as illustrated in FIG. 2C, which has a new object rendered for that portion of the image. In this example, a new mountain 242 is rendered, which is different from the mountain that was previously rendered as illustrated in FIG. 1B. In at least some embodiments a new image will be generated for each change to the semantic layout, in order to ensure the photorealism (or other desired quality) of the image. It should be understood that while photorealism is a primary use case for various embodiments, such approaches can be used to generate stylized images as well, as may correspond to graphical images, cartoons, art images, augmented and virtual reality displays, and the like. As mentioned, the user can also have the option of changing a label associated with a region, or requesting a different object of the type associated with the label. The example image 260 of FIG. 2D can be generated in response to the user changing the semantic layout to specify a beach label instead of a forest label for a specific region, which can cause a corresponding portion 262 of the image to be rendered with sand, palm trees, and other features of a beach, rather than the pine trees and needle-covered ground of the forest label.

FIG. 3 illustrates an example user interface 300 that can be utilized to provide functionality described with respect to the various embodiments. In this example, the semantic layout 320 is displayed. As mentioned, the layout can start out blank or of a solid color, such as solid white. A user can have the option of setting the size, resolution, and other such aspects. The interface can include a number of tools 304 (indicated by selectable icons or other such input options) that enable the user to draw, paint, erase, drag, resize or otherwise create, delete, and modify regions for the semantic layout. In some embodiments, if a user draws a bounded region then that region may be painted or filled automatically with a selected label color. The interface also can include selectable label elements 306, such as selectable icons or virtual buttons of a semantic palette, that enable a user to select or specify a label for a specific region. The user can select the label before creating a new region or choose a label after selecting a created region, among other such options. These and other such tools can enable the user to create and modify semantic layouts that can be used to synthesize the desired images. In at least some embodiments, a preview image 308 can be provided as part of the interface that gives the user at least a thumbnail view of an image that would result from the current region and label selections. The user can utilize the preview option, which may be of any appropriate size, resolution, or location, to make adjustments and view the effects in near real time. A separate window, panel, or interface can also be used to display the preview or rendered image in at least some embodiments. Also illustrated are style options 310 that can be selected by the user for application to the image to be generated. As discussed elsewhere herein, these styles can be applied to change the appearance of regions in the image. For example, a sunrise style might cause the sky region to have a specific appearance, and may cause the lighting (or other appearance aspects) of other regions to adjust accordingly. Similarly, a winter style might cause snow to appear on the trees, while a summer style might cause the trees to have full green leaves, among other such options. A user having designed a layout can select from among these and other styles to further alter the potential appearance of the resulting image, or to generate multiple versions of the image with different styles, etc. While the style options are shown as text labels, it should be understood that in some embodiments the style options might display rendered versions of the current working image with the respective styles, and in some embodiments might include slider bars, dials, or other options to impact the extent to which the style is applied. For example, a winter style option might cause snow to be rendered on trees. A slider bar might be used to adjust the amount of snow on the trees, such as may correlate to a light dusting of snow or a heavy amount of snow, etc.

In some embodiments, a user might not want to start from scratch but instead might want to add one or more items to an existing image. In such an instance, the user can open up the image in the user interface. The software can analyze the image using an appropriate process, such as computer vision or image segmentation, etc., to determine a segmentation mask for the objects represented in the image. In other embodiments the image may be treated as a simple background. The user can draw or update boundaries for regions of the semantic layout that can enable additional objects to be added into a scene. Such an approach can also enable objects in the image to be modified or replaced as desired. For example, a user might extend the boundary of a rock to hide a person in the background. A user might also want to resize a rock to make it look bigger, or to include a different type of rock. In some embodiments the user can use the input image simply to generate a semantic layout, and then have the image synthesizer generate a completely new image. The new image will have a similar layout, but may look significantly different due to different renderings of the types of object in the image. For example, the user might provide a scene with a mountain and lake, but the newly generated image may have water of different color, with different size waves, etc. In some embodiments a user may also have the option of only certain regions generated by the software, with some regions being substantially similar to what was provided in the input image. Various other manipulations can be utilized as well within the scope of the various embodiments.

Such approaches to image generation can mimic visualizations performed by the human brain. If a human is told to visualize a scene with water, sand, and palm trees, the human brain can generate a mental image of such a scene. Approaches in accordance with various embodiments can perform similar functionality using similar semantic input. The semantic labels applied to various regions can be used to select the types of objects to be rendered, and the size and location of the regions can be sued to determine which pixels of the image should be used to render those types of objects. It should be understood that in many instances the boundaries will not be hard boundaries but guides to use for rendering the objects, as hard boundaries would not provide for natural boundaries or photorealistic images. For example, a tree will generally have a very rough boundary, such that a smooth boundary provided by a user may be used as a general guide or target shape for the tree as a whole, but the image synthesis network can determine which pixels actually will correspond to individual types of objects in the synthesized image. Further, objects such as trees are not always solid or continuous and may have gaps between leaves and branches, which would cause other objects "behind" that tree in the scene to be visible or rendered in those gaps. An image synthesis network can then use the semantic layout as a guide for generating the final image.

In various embodiments, the image synthesis process utilizes spatially-adaptive normalization. The spatially-adaptive normalization can be accomplished using a conditional normalization layer for synthesizing photorealistic images given an input semantic layout. The input semantic layout can be used for modulating the activations in normalization layers through a spatially-adaptive, learned affine transformation. Experiments on several challenging datasets have successfully demonstrated aspects such as visual fidelity and alignment with input layouts. Further, such a model enables users to easily control the style and content of synthesis results, as well as to create multi-modal images.

Conditional image synthesis as used herein refers to the task of generating photorealistic images conditioning on some input data such as text, a label, an image, or a segmentation mask. Conventional methods computed output images by stitching image patches from a database of images. Using machine learning, such as neural networks, provides several advantages over these earlier approaches, including increases in speed and memory efficiency, as well as the removal of a need to maintain an external database of images.

In various embodiments, a semantic segmentation mask is converted to a photorealistic image, referred to herein as an semantic image synthesis process. Such a process has a wide range of applications, including photo manipulation and content generation However, the quality of the results may largely depend on the network architecture. In various embodiments, high quality results are obtained by using a spatially-adaptive normalization layer in a neural network, such as a generative adversarial network (GAN). A spatially-adaptive normalization layer is a simple but effective conditional normalization layer that can be used advantageously in an image synthesis network. Such a normalization layer can use an input semantic layout to modulate the activations through a spatially-adaptive, learned affine transformation, effectively propagating the semantic information throughout the network. The use of a spatially-adaptive normalization layer enables a relatively small, compact network to synthesize images with significantly better results compared to several conventional approaches. In addition, a normalization layer as described herein is effective against several variants for the semantic image synthesis task. Such an approach supports multi-modal generation and guided image synthesis, enabling controllable, diverse synthesis.

In some embodiments, an image synthesis network can utilize a deep generative model that can learn to sample images given a training dataset. FIG. 4 illustrates an example implementation of such a network 400. The models used can include, for example, generative adversarial networks (GANs) and variational auto-encoder (VAE) networks while aiming for a conditional image synthesis task. GANs in accordance with various embodiments can consist of a generator 410 and a discriminator 414. The generator 410 can produce realistic images (not shown) so that the discriminator cannot differentiate between real images and the synthesized images output from the generator.

Image synthesis can exist in many forms that differ in input data type. For example, a class-conditional image synthesis model can be used when the input data are single class labels. Text-to-image models can be used when the input data are text. For image-to-image translation, both input and output can be images. Conditional image synthesis models can be trained with or without input-output training pairs. In various embodiments, segmentation masks can be converted to photorealistic images in a paired setting as discussed herein, using a spatially-adaptive normalization layer.

Conditional normalization layers include representatives such as the Conditional Batch Normalization (Conditional BN) and Adaptive Instance Normalization (AdaIN). Different from earlier normalization techniques, conditional normalization layers utilize external data and generally operate as follows. First, layer activations are normalized to zero mean and unit deviation. Then the normalized activations are de-normalized to modulate the activation by an affine transformation whose parameters are inferred from external data. In various embodiments, each location or region has a different distribution for the de-normalization as determined by the segmentation mask. In some embodiments, the mean and variance values are determined by a map for the various regions, rather than a single mean and variance value for the entire image. This allows the distributions to be more adaptive than in conventional approaches, and helps to explain the training data as there are more parameters available. As an alternative, the segmentation mask could be concatenated with the activation.

For style transfer tasks, the affine parameters are used to control the global style of the output, and hence are uniform across spatial coordinates. In embodiments disclosed herein, the normalization layer applies a spatially-varying affine transformation.

In an example semantic image synthesis approach, a semantic segmentation mask can be defined by:

$$m \in L^{HxW}$$

where $L$ is a set of integers denoting the semantic labels, and $H$ and $W$ are the image height and width. Each entry in $m$ denotes the semantic label of a pixel. The semantic image synthesis problem is about learning a mapping function g that can convert the segmentation mask $m$ to a photorealistic image $x = g(m)$. In various embodiments, $g$ can be modeled using a deep convolutional network. By using a spatially-adaptive affine transformation in normalization layers as discussed herein, the network design can achieve a photorealistic semantic image synthesis result.

Various embodiments also utilize a spatially-adaptive de-normalization process. Let $h^i$ denote the activations of the $i^{th}$ layer of a deep convolutional network computed as processing a batch of $N$ samples. Let $C^i$ be the number of channels in the layer. Let $H^i$ and $W^i$ be the height and width of the activation map in the layer. A conditional normalization method can be used that provides for spatially-adaptive de-normalization (SPADE). Similar to batch normalization, the activation can be normalized channel-wise, and then affine-transformed with learned scale and bias. The affine parameters of the normalization layer can depend on the input segmentation mask and vary with respect to the location (y, x). Function mappings can be used to convert the input segmentation mask $m$ to the scaling and bias values at the site in the activation map of the $i^{th}$ layer of the deep network. The function mappings can be implemented using a simple two-layer convolutional network. For any spatially-invariant conditional data, such an approach can reduce to conditional batch normalization. Similarly, adaptive instance normalization can be reached by replacing the segmentation mask with another image, making the affine parameters spatially-invariant and setting N = 1. As the affine parameters are adaptive to the input segmentation mask, the proposed SPADE is better suited for semantic image synthesis. With SPADE, there is no need to feed the segmentation map to the first layer of the generator, since the learned affine parameters of SPADE provide enough signal about the label layout. Therefore, the genera-tor's encoder part can be discarded. Doing so can result in a more lightweight network. Furthermore, similar to existing class-conditional generators, such a generator 410 can take a random vector as input, which enables a simple and natural way for multi-modal synthesis.

An example generator architecture employs several ResNet blocks with upsampling layers. The affine parameters of the normalization layers are learned using SPADE. Since each residual block operates in a different scale, SPADE can downsample the semantic mask to match the spatial resolution. The input to the first layer of the generator can be a random noise sampled from unit Gaussian, or segmentation map downsampled to an 8x8 resolution, for example. These two approaches can produce very similar results. The generator can be trained with the same multi-scale discriminator and loss function used in pix2pixHD, for example, except that the least squared loss term can be replaced with the hinge loss term.

Using a random vector at the input of the generator network can enable an example architecture to provide a straightforward way to produce multi-modal results in semantic image synthesis. Namely, one can attach an image encoder network $e$ 406 that processes a real image 402 into a random vector or other latent representation 408, which can be then fed to the generator 410. The encoder 406 and the generator 410 form a variational auto-encoder in which the encoder network attempts to capture the style of the image, while the generator combines the encoded style and the segmentation map information via SPADE to reconstruct the original image. The encoder 406 also serves as a style guidance network at test time to capture the styles of target images.

The image encoder 406 can encode a real image to a latent representation 408 for generating a mean vector and a variance vector. The vectors can then be used to compute the noise input to the generator 410, such as by using a re-parameterization trick. The generator 410 can also take the segmentation mask 404, or semantic layout, of the input image as input. The discriminator 414 can accept a concatenation of the segmentation mask and the output image from the generator 410, as performed by an appropriate concatenator 412, as input. The discriminator 414 can then attempt to classify that concatenation as fake.

The image encoder 406 can consist of a series of convolutional layers followed by two linear layers that output a mean vector $\mu$ and a variance vector $\sigma$ of the output distribution. The architecture of the generator 410 can consist of a series of the SPADE residual blocks with nearest neighbor up-sampling. The network can be trained using a number of GPUs processing simultaneously in some embodiments, using a synchronized version of the batch normalization. Spectral normalization can be applied to all the convolutional layers in the generator 410. The architecture of the discriminator 414 can takes the concatenation of the segmentation map and the image as input. An example discriminator can utilize a convolutional layer as the final layer.

A learning objective function can be used, such as may include a Hinge loss term. When training an example framework with an image encoder for multimodal synthesis and style-guided image synthesis, a divergence loss term can be included that utilizes a standard Gaussian distribution and the variational distribution $q$ is fully determined by a mean vector and a variance vector. A re-parameterization can be performed for back-propagating the gradient from the generator 410 to the image encoder 406. As illustrated, the semantic layout 404 can be input to different locations in the network, such as to multiple places in the generator 410 as well as to the concatenator 412. The image synthesis network converts the sematic layout 404, or segmentation mask, into an image. The network can be trained using, for example, hundreds of thousands of images of objects of the relevant labels or object types. The network can then generate photorealistic images conforming to that segmentation mask.

FIG. 5 illustrates an example process 500 for generating a photorealistic image from a semantic layout that can be utilized in accordance with various embodiments. It should be understood for this and other processes discussed herein that there can be additional, alternative, or fewer steps performed in similar or alternative orders, or in parallel, within the scope of the various embodiments unless otherwise stated. In this example, a user can generate a semantic layout using an appropriate application or user interface as discussed herein. As mentioned, in other embodiments a user might provide an image that can be used to generate a semantic layout, among other such options.

In this example, a new image space is provided 502 that can be of specified dimensions, size, resolution, etc. As known for image editing software, the new image space can be a new image file of a solid background color, such as white. In some embodiments a user can apply a label to the background as a starting point, such as to cause the image to have a "sky" label for any pixels that do not otherwise have a region associated therewith. The user can then provide input that can designate a boundary of a region for the image, such as by drawing on a touch sensitive display or moving a mouse along a desired path, among other such options. The system can then receive 504 indication of a region boundary indicated by the user, such as may be a result of the user drawing a boundary as discussed. In some embodiments a user must indicate that a region is complete, while in other embodiments a user completing a boundary that encloses a region (where the starting and ending points of the boundary are at the same pixel location, or within a pixel threshold of the same location) will cause that region to automatically be indicated as a new or updated region. Along with the boundary for the region, a selection of a label for the region can be received 506, where the label is a semantic label (or other such designation) indicating a type of object to be rendered for that region. As discussed herein, object as use for this purpose should be interpreted broadly to encompass anything that can be represented in an image, such as a person, inanimate object, location, background, etc. As mentioned, for an outdoor scene this might include objects such as water, sky, beach, forest, tree, rock, flower, and the like. For interior scenes this might include wall, floor, window, chair, table, etc.

Once the region is defined by the boundary and label, the region (as displayed through the interface) can be filled 508 with a color associated with the selected label. If it is determined 510 that there is at least one more region to be defined, then the process can continue with another region being defined and label being applied. As mentioned, new shapes or labels can be defined for one or more of the existing regions as well within the scope of the various embodiments. Once the desired regions have been defined and labeled, an indication can be received that an image should be rendered. As discussed, this can be a result of a manual input from the user, can be performed automatically upon any update to the semantic layout, or can be performed once all pixel locations for the layout have been assigned to a region, among other such options. A semantic layout can then be generated 512 using the labeled regions of the image space. The semantic layout can be provided 514 as input to an image synthesis network. The network can process 516 the layout as discussed herein, including utilizing a spatially-adaptive, conditional normalization layer. As discussed, the network performs both normalization and de-normalization using the semantic information. A set of inferences from the network can then be used to generate 518 a photorealistic image including the types of objects indicated by the labels for the designated regions. As mentioned, in some embodiments objects of the various types will be selected at random, and the user can request a different object of the type be used to render the image. In other embodiments the object might be selected for the type of scene or based on the shape of the boundary, as a pine tree will be more appropriate for a different shape of boundary than would a palm tree. Various other approaches can be used as well as discussed herein.

FIG. 6 illustrates an example environment 600 that can be utilized to implement aspects of the various embodiments. In some embodiments, a user may utilize a client device 602 to generate a semantic layout. The client device can be any appropriate computing device capable of enabling a user to generate a semantic layout as discussed herein, such as may include a desktop computer, notebook computer, smart phone, tablet computer, computer workstation, gaming console, and the like. A user can generate the semantic layout using a user interface (UI) of an image editor application 606 running on the client device, although at least some functionality may also operate on a remote device, networked device, or in "the cloud" in some embodiments. The user can provide input to the UI, such as through a touch-sensitive display 604 or by moving a mouse cursor displayed on a display screen, among other such options. As mentioned, the user may be able to select various tools, tool sizes, and selectable graphical elements in order to provide input to the application. The client device can include at least one processor (e.g., a CPU or GPU) to execute the application and/or perform tasks on behalf of the application. A semantic layout generated through the application can be stored locally to local storage 612, along with any synthesized images generated from that semantic layout.

In some embodiments, a semantic layout generated on the client device 602 can be processed on the client device in order to synthesize a corresponding image, such as a photorealistic image or stylized image as discussed herein. In other embodiments, the client device may send the semantic layout, or data for the semantic layout, over at least one network 614 to be received by a remote computing system, as may be part of a resource provider environment 616. The at least one network 614 can include any appropriate network, including an intranet, the Internet, a cellular network, a local area network (LAN), or any other such network or combination, and communication over the network can be enabled via wired and/or wireless connections. The provider environment 616 can include any appropriate components for receiving requests and returning information or performing actions in response to those requests. As an example, the provider environment might include Web servers and/or application servers for receiving and processing requests, then returning data or other content or information in response to the request.

Communications received to the provider environment 616 can be received to an interface layer 618. The interface layer 618 can include application programming interfaces (APIs) or other exposed interfaces enabling a user to submit requests to the provider environment. The interface layer 618 in this example can include other components as well, such as at least one Web server, routing components, load balancers, and the like. Components of the interface layer 618 can determine a type of request or communication, and can direct the request to the appropriate system or service. For example, if a communication is to train an image synthesis network for a specific type of image content, such as scenery, animals, or people, as well as stylized or photorealistic, the communication can be directed to an image manager 620, which can be a system or service provided using various resources of the provider environment 616. The request can then be directed to a training manager 624, which can select an appropriate model or network and then train the model using relevant training data 624. Once a network is trained and successfully evaluated, the network can be stored to a model repository 626, for example, that may store different models or networks for different types of image synthesis. If a request is received that includes a semantic layout to be used to synthesize an image, information for the request can be directed to an image synthesizer 628 that can obtain the corresponding trained network, such as a trained generative adversarial network with a conditional normalization network as discussed herein. The image synthesizer 628 can then cause the semantic layout to be processed to generate an image from the semantic layout. The synthesized image can then be transmitted to the client device 602 for display on the display element 604. If the user wants to modify any aspects of the image, the user can provide additional input to the application 606, which can cause a new or updated image to be generated using the same process for the new or updated semantic layout.

In various embodiments the processor 608 (or a processor of the training manager 622 or image synthesizer 628) will be a central processing unit (CPU). As mentioned, however, resources in such environments can utilize GPUs to process data for at least certain types of requests. With thousands of cores, GPUs are designed to handle substantial parallel workloads and, therefore, have become popular in deep learning for training neural networks and generating predictions. While the use of GPUs for offline builds has enabled faster training of larger and more complex models, generating predictions offline implies that either request-time input features cannot be used or predictions must be generated for all permutations of features and stored in a lookup table to serve real-time requests. If the deep learning framework supports a CPU-mode and the model is small and simple enough to perform a feed-forward on the CPU with a reasonable latency, then a service on a CPU instance could host the model. In this case, training can be done offline on the GPU and inference done in real-time on the CPU. If the CPU approach is not a viable option, then the service can run on a GPU instance. Because GPUs have different performance and cost characteristics than CPUs, however, running a service that offloads the runtime algorithm to the GPU can require it to be designed differently from a CPU based service.

As mentioned, various embodiments take advantage of machine learning. As an example, deep neural networks (DNNs) developed on processors have been used for diverse use cases, from self-driving cars to faster drug development, from automatic image captioning in online image databases to smart real-time language translation in video chat applications. Deep learning is a technique that models the neural learning process of the human brain, continually learning, continually getting smarter, and delivering more accurate results more quickly over time. A child is initially taught by an adult to correctly identify and classify various shapes, eventually being able to identify shapes without any coaching. Similarly, a deep learning or neural learning system needs to be trained in object recognition and classification for it get smarter and more efficient at identifying basic objects, occluded objects, etc., while also assigning context to objects.

At the simplest level, neurons in the human brain look at various inputs that are received, importance levels are assigned to each of these inputs, and output is passed on to other neurons to act upon. An artificial neuron or perceptron is the most basic model of a neural network. In one example, a perceptron may receive one or more inputs that represent various features of an object that the perceptron is being trained to recognize and classify, and each of these features is assigned a certain weight based on the importance of that feature in defining the shape of an object.

A deep neural network (DNN) model includes multiple layers of many connected perceptrons (e.g., nodes) that can be trained with enormous amounts of input data to quickly solve complex problems with high accuracy. In one example, a first layer of the DLL model breaks down an input image of an automobile into various sections and looks for basic patterns such as lines and angles. The second layer assembles the lines to look for higher level patterns such as wheels, windshields, and mirrors. The next layer identifies the type of vehicle, and the final few layers generate a label for the input image, identifying the model of a specific automobile brand. Once the DNN is trained, the DNN can be deployed and used to identify and classify objects or patterns in a process known as inference. Examples of inference (the process through which a DNN extracts useful information from a given input) include identifying handwritten numbers on checks deposited into ATM machines, identifying images of friends in photos, delivering movie recommendations to over fifty million users, identifying and classifying different types of automobiles, pedestrians, and road hazards in driverless cars, or translating human speech in real-time.

During training, data flows through the DNN in a forward propagation phase until a prediction is produced that indicates a label corresponding to the input. If the neural network does not correctly label the input, then errors between the correct label and the predicted label are analyzed, and the weights are adjusted for each feature during a backward propagation phase until the DNN correctly labels the input and other inputs in a training dataset. Training complex neural networks requires massive amounts of parallel computing performance, including floating-point multiplications and additions that are supported. Inferencing is less compute-intensive than training, being a latency-sensitive process where a trained neural network is applied to new inputs it has not seen before to classify images, translate speech, and generally infer new information.

Neural networks rely heavily on matrix math operations, and complex multi-layered networks require tremendous amounts of floating-point performance and bandwidth for both efficiency and speed. With thousands of processing cores, optimized for matrix math operations, and delivering tens to hundreds of TFLOPS of performance, a computing platform can deliver performance required for deep neural network-based artificial intelligence and machine learning applications.

FIG. 7 illustrates an example system 700 that can be used to classify data, or generate inferences, in accordance with various embodiments. Various predictions, labels, or other outputs can be generated for input data as well, as should be apparent in light of the teachings and suggestions contained herein. Further, both supervised and unsupervised training can be used in various embodiments discussed herein. In this example, a set of classified data 702 is provided as input to function as training data. The classified data can include instances of at least one type of object for which a statistical model is to be trained, as well as information that identifies that type of object. For example, the classified data might include a set of images that each includes a representation of a type of object, where each image also includes, or is associated with, a label, metadata, classification, or other piece of information identifying the type of object represented in the respective image. Various other types of data may be used as training data as well, as may include text data, audio data, video data, and the like. The classified data 702 in this example is provided as training input to a training manager 704. The training manager 704 can be a system or service that includes hardware and software, such as one or more computing devices executing a training application, for training the statistical model. In this example, the training manager 704 will receive an instruction or request indicating a type of model to be used for the training. The model can be any appropriate statistical model, network, or algorithm useful for such purposes, as may include an artificial neural network, deep learning algorithm, learning classifier, Bayesian network, and the like. The training manager 704 can select a base model, or other untrained model, from an appropriate repository 706 and utilize the classified data 702 to train the model, generating a trained model 708 that can be used to classify similar types of data. In some embodiments where classified data is not used, the appropriate based model can still be selected for training on the input data per the training manager.

The model can be trained in a number of different ways, as may depend in part upon the type of model selected. For example, in one embodiment a machine learning algorithm can be provided with a set of training data, where the model is a model artifact created by the training process. Each instance of training data contains the correct answer (e.g., classification), which can be referred to as a target or target attribute. The learning algorithm finds patterns in the training data that map the input data attributes to the target, the answer to be predicted, and a machine learning model is output that captures these patterns. The machine learning model can then be used to obtain predictions on new data for which the target is not specified.

In one example, a training manager can select from a set of machine learning models including binary classification, multiclass classification, and regression models. The type of model to be used can depend at least in part upon the type of target to be predicted. Machine learning models for binary classification problems predict a binary outcome, such as one of two possible classes. A learning algorithm such as logistic regression can be used to train binary classification models. Machine learning models for multiclass classification problems allow predictions to be generated for multiple classes, such as to predict one of more than two outcomes. Multinomial logistic regression can be useful for training multiclass models. Machine learning models for regression problems predict a numeric value. Linear regression can be useful for training regression models.

In order to train a machine learning model in accordance with one embodiment, the training manager must determine the input training data source, as well as other information such as the name of the data attribute that contains the target to be predicted, required data transformation instructions, and training parameters to control the learning algorithm. During the training process, a training manager in some embodiments may automatically select the appropriate learning algorithm based on the type of target specified in the training data source. Machine learning algorithms can accept parameters used to control certain properties of the training process and of the resulting machine learning model. These are referred to herein as training parameters. If no training parameters are specified, the training manager can utilize default values that are known to work well for a large range of machine learning tasks. Examples of training parameters for which values can be specified include the maximum model size, maximum number of passes over training data, shuffle type, regularization type, learning rate, and regularization amount. Default settings may be specified, with options to adjust the values to fine-tune performance.

The maximum model size is the total size, in units of bytes, of patterns that are created during the training of model. A model may be created of a specified size by default, such as a model of 100 MB. If the training manager is unable to determine enough patterns to fill the model size, a smaller model may be created. If the training manager finds more patterns than will fit into the specified size, a maximum cut-off may be enforced by trimming the patterns that least affect the quality of the learned model. Choosing the model size provides for control of the trade-off between the predictive quality of a model and the cost of use. Smaller models can cause the training manager to remove many patterns to fit within the maximum size limit, affecting the quality of predictions. Larger models, on the other hand, may cost more to query for real-time predictions. Larger input data sets do not necessarily result in larger models because models store patterns, not input data; if the patterns are few and simple, the resulting model will be small. Input data that has a large number of raw attributes (input columns) or derived features (outputs of the data transformations) will likely have more patterns found and stored during the training process.

In some embodiments, the training manager can make multiple passes or iterations over the training data to discover patterns. There may be a default number of passes, such as ten passes, while in some embodiments up to a maximum number of passes may be set, such as up to one hundred passes. In some embodiments there may be no maximum set, or there may be a convergence or other criterion set which will trigger an end to the training process. In some embodiments the training manager can monitor the quality of patterns (i.e., the model convergence) during training, and can automatically stop the training when there are no more data points or patterns to discover. Data sets with only a few observations may require more passes over the data to obtain higher model quality. Larger data sets may contain many similar data points, which can reduce the need for a large number of passes. The potential impact of choosing more data passes over the data is that the model training can takes longer and cost more in terms of resources and system utilization.

In some embodiments the training data is shuffled before training, or between passes of the training. The shuffling in many embodiments is a random or pseudo-random shuffling to generate a truly random ordering, although there may be some constraints in place to ensure that there is no grouping of certain types of data, or the shuffled data may be reshuffled if such grouping exists, etc. Shuffling changes the order or arrangement in which the data is utilized for training so that the training algorithm does not encounter groupings of similar types of data, or a single type of data for too many observations in succession. For example, a model might be trained to predict a product type, where the training data includes movie, toy, and video game product types. The data might be sorted by product type before uploading. The algorithm can then process the data alphabetically by product type, seeing only data for a type such as movies first. The model will begin to learn patterns for movies. The model will then encounter only data for a different product type, such as toys, and will try to adjust the model to fit the toy product type, which can degrade the patterns that fit movies. This sudden switch from movie to toy type can produce a model that does not learn how to predict product types accurately. Shuffling can be performed in some embodiments before the training data set is split into training and evaluation subsets, such that a relatively even distribution of data types is utilized for both stages. In some embodiments the training manager can automatically shuffle the data using, for example, a pseudo-random shuffling technique.

When creating a machine learning model, the training manager in some embodiments can enable a user to specify settings or apply custom options. For example, a user may specify one or more evaluation settings, indicating a portion of the input data to be reserved for evaluating the predictive quality of the machine learning model. The user may specify a recipe that indicates which attributes and attribute transformations are available for model training. The user may also specify various training parameters that control certain properties of the training process and of the resulting model.

Once the training manager has determined that training of the model is complete, such as by using at least one end criterion discussed herein, the trained model 708 can be provided for use by a classifier 714 in classifying unclassified data 712. In many embodiments, however, the trained model 708 will first be passed to an evaluator 710, which may include an application or process executing on at least one computing resource for evaluating the quality (or another such aspect) of the trained model. The model is evaluated to determine whether the model will provide at least a minimum acceptable or threshold level of performance in predicting the target on new and future data. Since future data instances will often have unknown target values, it can be desirable to check an accuracy metric of the machine learning on data for which the target answer is known, and use this assessment as a proxy for predictive accuracy on future data.

In some embodiments, a model is evaluated using a subset of the classified data 702 that was provided for training. The subset can be determined using a shuffle and split approach as discussed above. This evaluation data subset will be labeled with the target, and thus can act as a source of ground truth for evaluation. Evaluating the predictive accuracy of a machine learning model with the same data that was used for training is not useful, as positive evaluations might be generated for models that remember the training data instead of generalizing from it. Once training has completed, the evaluation data subset is processed using the trained model 708 and the evaluator 710 can determine the accuracy of the model by comparing the ground truth data against the corresponding output (or predictions/observations) of the model. The evaluator 710 in some embodiments can provide a summary or performance metric indicating how well the predicted and true values match. If the trained model does not satisfy at least a minimum performance criterion, or other such accuracy threshold, then the training manager 704 can be instructed to perform further training, or in some instances try training a new or different model, among other such options. If the trained model 708 satisfies the relevant criteria, then the trained model can be provided for use by the classifier 714.

When creating and training a machine learning model, it can be desirable in at least some embodiments to specify model settings or training parameters that will result in a model capable of making the most accurate predictions. Example parameters include the number of passes to be performed (forward and/or backward), regularization, model size, and shuffle type. As mentioned, however, selecting model parameter settings that produce the best predictive performance on the evaluation data might result in an overfitting of the model. Overfitting occurs when a model has memorized patterns that occur in the training and evaluation data sources, but has failed to generalize the patterns in the data. Overfitting often occurs when the training data includes all of the data used in the evaluation. A model that has been over fit may perform well during evaluation, but may fail to make accurate predictions on new or otherwise unclassified data. To avoid selecting an over fitted model as the best model, the training manager can reserve additional data to validate the performance of the model. For example, the training data set might be divided into 60 percent for training, and 40 percent for evaluation or validation, which may be divided into two or more stages. After selecting the model parameters that work well for the evaluation data, leading to convergence on a subset of the validation data, such as half the validation data, a second validation may be executed with a remainder of the validation data to ensure the performance of the model. If the model meets expectations on the validation data, then the model is not overfitting the data. Alternatively, a test set or held-out set may be used for testing the parameters. Using a second validation or testing step helps to select appropriate model parameters to prevent overfitting. However, holding out more data from the training process for validation makes less data available for training. This may be problematic with smaller data sets as there may not be sufficient data available for training. One approach in such a situation is to perform cross-validation as discussed elsewhere herein.

There are many metrics or insights that can be used to review and evaluate the predictive accuracy of a given model. One example evaluation outcome contains a prediction accuracy metric to report on the overall success of the model, as well as visualizations to help explore the accuracy of the model beyond the prediction accuracy metric. The outcome can also provide an ability to review the impact of setting a score threshold, such as for binary classification, and can generate alerts on criteria to check the validity of the evaluation. The choice of the metric and visualization can depend at least in part upon the type of model being evaluated.

Once trained and evaluated satisfactorily, the trained machine learning model can be used to build or support a machine learning application. In one embodiment building a machine learning application is an iterative process that involves a sequence of steps. The core machine learning problem(s) can be framed in terms of what is observed and what answer the model is to predict. Data can then be collected, cleaned, and prepared to make the data suitable for consumption by machine learning model training algorithms. The data can be visualized and analyzed to run sanity checks to validate the quality of the data and to understand the data. It might be the case that the raw data (e.g., input variables) and answer (e.g., the target) are not represented in a way that can be used to train a highly predictive model. Therefore, it may be desirable to construct more predictive input representations or features from the raw variables. The resulting features can be fed to the learning algorithm to build models and evaluate the quality of the models on data that was held out from model building. The model can then be used to generate predictions of the target answer for new data instances.

In the example system 700 of FIG. 7, the trained model 710 after evaluation is provided, or made available, to a classifier 714 that is able to use the trained model to process unclassified data. This may include, for example, data received from users or third parties that are not classified, such as query images that are looking for information about what is represented in those images. The unclassified data can be processed by the classifier using the trained model, and the results 716 (i.e., the classifications or predictions) that are produced can be sent back to the respective sources or otherwise processed or stored. In some embodiments, and where such usage is permitted, the now classified data instances can be stored to the classified data repository, which can be used for further training of the trained model 708 by the training manager. In some embodiments the model will be continually trained as new data is available, but in other embodiments the models will be retrained periodically, such as once a day or week, depending upon factors such as the size of the data set or complexity of the model.

The classifier can include appropriate hardware and software for processing the unclassified data using the trained model. In some instances the classifier will include one or more computer servers each having one or more graphics processing units (GPUs) that are able to process the data. The configuration and design of GPUs can make them more desirable to use in processing machine learning data than CPUs or other such components. The trained model in some embodiments can be loaded into GPU memory and a received data instance provided to the GPU for processing. GPUs can have a much larger number of cores than CPUs, and the GPU cores can also be much less complex. Accordingly, a given GPU may be able to process thousands of data instances concurrently via different hardware threads. A GPU can also be configured to maximize floating point throughput, which can provide significant additional processing advantages for a large data set.

Even when using GPUs, accelerators, and other such hardware to accelerate tasks such as the training of a model or classification of data using such a model, such tasks can still require significant time, resource allocation, and cost. For example, if the machine learning model is to be trained using 100 passes, and the data set includes 1,000,000 data instances to be used for training, then all million instances would need to be processed for each pass. Different portions of the architecture can also be supported by different types of devices. For example, training may be performed using a set of servers at a logically centralized location, as may be offered as a service, while classification of raw data may be performed by such a service or on a client device, among other such options. These devices may also be owned, operated, or controlled by the same entity or multiple entities in various embodiments.

FIG. 8 illustrates an example statistical model 800 that can be utilized in accordance with various embodiments. In this example the statistical model is an artificial neural network (ANN) that includes a multiple layers of nodes, including an input layer 802, an output layer 806, and multiple layers 804 of intermediate nodes, often referred to as "hidden" layers, as the internal layers and nodes are typically not visible or accessible in conventional neural networks. As discussed elsewhere herein, there can be additional types of statistical models used as well, as well as other types of neural networks including other numbers of selections of nodes and layers, among other such options. In this network, all nodes of a given layer are interconnected to all nodes of an adjacent layer. As illustrated, the nodes of an intermediate layer will then each be connected to nodes of two adjacent layers. The nodes are also referred to as neurons or connected units in some models, and connections between nodes are referred to as edges. Each node can perform a function for the inputs received, such as by using a specified function. Nodes and edges can obtain different weightings during training, and individual layers of nodes can perform specific types of transformations on the received input, where those transformations can also be learned or adjusted during training. The learning can be supervised or unsupervised learning, as may depend at least in part upon the type of information contained in the training data set. Various types of neural networks can be utilized, as may include a convolutional neural network (CNN) that includes a number of convolutional layers and a set of pooling layers, and have proven to be beneficial for applications such as image recognition. CNNs can also be easier to train than other networks due to a relatively small number of parameters to be determined.

In some embodiments, such a complex machine learning model can be trained using various tuning parameters. Choosing the parameters, fitting the model, and evaluating the model are parts of the model tuning process, often referred to as hyperparameter optimization. Such tuning can involve introspecting the underlying model or data in at least some embodiments. In a training or production setting, a robust workflow can be important to avoid overfitting of the hyperparameters as discussed elsewhere herein. Cross-validation and adding Gaussian noise to the training dataset are techniques that can be useful for avoiding overfitting to any one dataset. For hyperparameter optimization it may be desirable in some embodiments to keep the training and validation sets fixed. In some embodiments, hyperparameters can be tuned in certain categories, as may include data preprocessing (in other words, translating words to vectors), CNN architecture definition (for example, filter sizes, number of filters), stochastic gradient descent parameters (for example, learning rate), and regularization (for example, dropout probability), among other such options.

In an example pre-processing step, instances of a dataset can be embedded into a lower dimensional space of a certain size. The size of this space is a parameter to be tuned. The architecture of the CNN contains many tunable parameters. A parameter for filter sizes can represent an interpretation of the information that corresponds to the size of a instance that will be analyzed. In computational linguistics, this is known as the n-gram size. An example CNN uses three different filter sizes, which represent potentially different n-gram sizes. The number of filters per filter size can correspond to the depth of the filter. Each filter attempts to learn something different from the structure of the instance, such as the sentence structure for textual data. In the convolutional layer, the activation function can be a rectified linear unit and the pooling type set as max pooling. The results can then be concatenated into a single dimensional vector, and the last layer is fully connected onto a two-dimensional output. This corresponds to the binary classification to which an optimization function can be applied.

One such function is an implementation of a Root Mean Square (RMS) propagation method of gradient descent, where example hyperparameters can include learning rate, batch size, maximum gradient normal, and epochs. With neural networks, regularization can be an extremely important consideration. As mentioned, in some embodiments the input data may be relatively sparse. A main hyperparameter in such a situation can be the dropout at the penultimate layer, which represents a proportion of the nodes that will not "fire" at each training cycle. An example training process can suggest different hyperparameter configurations based on feedback for the performance of previous configurations. The model can be trained with a proposed configuration, evaluated on a designated validation set, and the performance reporting. This process can be repeated to, for example, trade off exploration (learning more about different configurations) and exploitation (leveraging previous knowledge to achieve better results).

As training CNNs can be parallelized and GPU-enabled computing resources can be utilized, multiple optimization strategies can be attempted for different scenarios. A complex scenario allows tuning the model architecture and the preprocessing and stochastic gradient descent parameters. This expands the model configuration space. In a basic scenario, only the preprocessing and stochastic gradient descent parameters are tuned. There can be a greater number of configuration parameters in the complex scenario than in the basic scenario. The tuning in a joint space can be performed using a linear or exponential number of steps, iteration through the optimization loop for the models. The cost for such a tuning process can be significantly less than for tuning processes such as random search and grid search, without any significant performance loss.

Some embodiments can utilize backpropagation to calculate a gradient used for determining the weights for the neural network. Backpropagation is a form of differentiation, and can be used by a gradient descent optimization algorithm to adjust the weights applied to the various nodes or neurons as discussed above. The weights can be determined in some embodiments using the gradient of the relevant loss function. Backpropagation can utilize the derivative of the loss function with respect to the output generated by the statistical model. As mentioned, the various nodes can have associated activation functions that define the output of the respective nodes. Various activation functions can be used as appropriate, as may include radial basis functions (RBFs) and sigmoids, which can be utilized by various support vector machines (SVMs) for transformation of the data. The activation function of an intermediate layer of nodes is referred to herein as the inner product kernel. These functions can include, for example, identity functions, step functions, sigmoidal functions, ramp functions, and the like. Activation functions can also be linear or non-linear, among other such options.

FIG. 9 illustrates a set of basic components of a computing device 900 that can be utilized to implement aspects of the various embodiments. In this example, the device includes at least one processor 902 for executing instructions that can be stored in a memory device or element 904. As would be apparent to one of ordinary skill in the art, the device can include many types of memory, data storage or computer-readable media, such as a first data storage for program instructions for execution by the processor 902, the same or separate storage can be used for images or data, a removable memory can be available for sharing information with other devices, and any number of communication approaches can be available for sharing with other devices. The device typically will include some type of display element 906, such as a touch screen, organic light emitting diode (OLED) or liquid crystal display (LCD), although devices such as portable media players might convey information via other means, such as through audio speakers. As discussed, the device in many embodiments will include at least communication component 908 and/or networking components 910, such as may support wired or wireless communications over at least one network, such as the Internet, a local area network (LAN), Bluetooth®, or a cellular network, among other such options. The components can enable the device to communicate with remote systems or services. The device can also include at least one additional input device 912 able to receive conventional input from a user. This conventional input can include, for example, a push button, touch pad, touch screen, wheel, joystick, keyboard, mouse, trackball, keypad or any other such device or element whereby a user can input a command to the device. These I/O devices could even be connected by a wireless infrared or Bluetooth or other link as well in some embodiments. In some embodiments, however, such a device might not include any buttons at all and might be controlled only through a combination of visual and audio commands such that a user can control the device without having to be in contact with the device.

The various embodiments can be implemented in a wide variety of operating environments, which in some cases can include one or more user computers or computing devices which can be used to operate any of a number of applications. User or client devices can include any of a number of general purpose personal computers, such as desktop or laptop computers running a standard operating system, as well as cellular, wireless and handheld devices running mobile software and capable of supporting a number of networking and messaging protocols. Such a system can also include a number of workstations running any of a variety of commercially-available operating systems and other known applications for purposes such as development and database management. These devices can also include other electronic devices, such as dummy terminals, thin-clients, gaming systems and other devices capable of communicating via a network.

Most embodiments utilize at least one network that would be familiar to those skilled in the art for supporting communications using any of a variety of commercially-available protocols, such as TCP/IP or FTP. The network can be, for example, a local area network, a wide-area network, a virtual private network, the Internet, an intranet, an extranet, a public switched telephone network, an infrared network, a wireless network and any combination thereof. In embodiments utilizing a Web server, the Web server can run any of a variety of server or mid-tier applications, including HTTP servers, FTP servers, CGI servers, data servers, Java servers and business application servers. The server(s) may also be capable of executing programs or scripts in response requests from user devices, such as by executing one or more Web applications that may be implemented as one or more scripts or programs written in any programming language, such as Java®, C, C# or C++ or any scripting language, such as Python, as well as combinations thereof. The server(s) may also include database servers, including without limitation those commercially available from Oracle®, Microsoft®, Sybase® and IBM®.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network (SAN) familiar to those skilled in the art. Similarly, any necessary files for performing the functions attributed to the computers, servers or other network devices may be stored locally and/or remotely, as appropriate. Where a system includes computerized devices, each such device can include hardware elements that may be electrically coupled via a bus, the elements including, for example, at least one central processing unit (CPU), at least one input device (e.g., a mouse, keyboard, controller, touch-sensitive display element or keypad) and at least one output device (e.g., a display device, printer or speaker). Such a system may also include one or more storage devices, such as disk drives, optical storage devices and solid-state storage devices such as random access memory (RAM) or read-only memory (ROM), as well as removable media devices, memory cards, flash cards, etc.

Such devices can also include a computer-readable storage media reader, a communications device (e.g., a modem, a network card (wireless or wired), an infrared communication device) and working memory as described above. The computer-readable storage media reader can be connected with, or configured to receive, a computer-readable storage medium representing remote, local, fixed and/or removable storage devices as well as storage media for temporarily and/or more permanently containing, storing, transmitting and retrieving computer-readable information. The system and various devices also typically will include a number of software applications, modules, services or other elements located within at least one working memory device, including an operating system and application programs such as a client application or Web browser. It should be appreciated that alternate embodiments may have numerous variations from that described above. For example, customized hardware might also be used and/or particular elements might be implemented in hardware, software (including portable software, such as applets) or both. Further, connection to other computing devices such as network input/output devices may be employed.

Storage media and other non-transitory computer readable media for containing code, or portions of code, can include any appropriate media known or used in the art, such as but not limited to volatile and non-volatile, removable and non-removable media implemented in any method or technology for storage of information such as computer readable instructions, data structures, program modules or other data, including RAM, ROM, EEPROM, flash memory or other memory technology, CD-ROM, digital versatile disk (DVD) or other optical storage, magnetic cassettes, magnetic tape, magnetic disk storage or other magnetic storage devices or any other medium which can be used to store the desired information and which can be accessed by a system device. Based on the disclosure and teachings provided herein, a person of ordinary skill in the art will appreciate other ways and/or methods to implement the various embodiments

The specification and drawings are, accordingly, to be regarded in an illustrative rather than a restrictive sense. It will, however, be evident that various modifications and changes may be made thereunto without departing from the broader spirit and scope of the invention as set forth in the claims.

## Claims

**1.** A computer-implemented method, comprising:

receiving a boundary input separating an image space into two regions associated with respective semantic labels, the respective image labels indicating respective types of image content;
generating a semantic segmentation mask representing the two regions with the respective semantic labels;
providing the semantic segmentation mask as input to a trained image synthesis network, the trained image synthesis network including a spatially-adaptive normalization layer configured to propagate semantic information from the semantic segmentation mask throughout other layers of the trained image synthesis network;
receiving, from the trained image synthesis network, value inferences for a plurality of pixel locations of the image space corresponding to the respective types of image content for the regions associated with those pixel locations; and
rendering a substantially photorealistic image from the image space using the value inferences, the photorealistic image including the types of image content for the regions defined by the boundary input.

**2.** The computer-implemented method of claim 1, further comprising:
modulating, by the spatially-adaptive normalization layer, a set of activations through a spatially-adaptive transformation in order to propagate the semantic information throughout the other layers of the trained image synthesis network.

**3.** The computer-implemented method of claim 1 or 2, wherein the spatially-adaptive normalization layer is a conditional normalization layer, and further comprising:

normalizing, by the spatially-adaptive normalization layer, layer activations to zero mean; and
de-normalizing the normalized layer activations to modulate activation using an affine transformation.

**4.** The computer-implemented method of any of the preceding claims, wherein the trained image synthesis network includes a generative adversarial network (GAN) including a generator and a discriminator.

**5.** The computer-implemented method of any of the preceding claims, further comprising:
selecting content, from a plurality of content options of the type of image content for a first region of the two regions, to generate for the first region.

**6.** A computer-implemented method, comprising:

receiving a semantic layout indicating two regions of a digital representation of an image; and
inferring a substantially photorealistic image using a neural network based, at least in part, on the received semantic layout, wherein the neural network includes at least one spatially-adaptive normalization layer to normalize information from the semantic layout.

**7.** The computer-implemented method of claim 6, further comprising:

determining semantic labels associated with the two regions, the semantic labels indicating respective types of image content; and
generating representations of the respective types of image content for the two regions of the substantially photorealistic image.

**8.** The computer-implemented method of claim 7, further comprising:

receiving a boundary input separating an image space into the two regions;
receiving indication of semantic labels to be associated with the two regions; and
generating the semantic layout representing the two regions with the semantic labels.

**9.** The computer-implemented method of claim 8, further comprising:
selecting content, from a plurality of content options of types of image content associated with the semantic labels, to infer for two regions.

**10.** The computer-implemented method of any of claims 6 to 9, wherein the at least one spatially-adaptive normalization layer is a conditional layer configured to propagate semantic information from the semantic layout throughout other layers of the neural network.

**11.** The computer-implemented method of claim 10, further comprising:
modulating, by the spatially-adaptive normalization layer, a set of activations through a spatially-adaptive transformation in order to propagate the semantic information throughout the other layers of the neural network.

**12.** The computer-implemented method of any of claims 6 to 11, further comprising:

normalizing, by the spatially-adaptive normalization layer, layer activations to zero mean; and
de-normalizing the normalized layer activations to modulate activation using an affine transformation.

**13.** The computer-implemented method of claim 12, wherein the de-normalizing uses different normalization parameter values the two regions.

**14.** The computer-implemented method of any of claims 6 to 13, wherein the neural network is a generative adversarial network (GAN) including a generator and a discriminator.

**15.** A system, comprising:

at least one processor; and
memory including instructions that, when executed by the at least one processor, cause the system to:

receive a semantic layout indicating two regions of a digital representation of an image; and

infer a substantially photorealistic image using a neural network based, at least in part, on the received semantic layout, wherein the neural network includes at least one spatially-adaptive normalization layer to normalize information from the semantic layout.

**16.** The system of claim 15, wherein the instructions when executed further cause the system to:

determine semantic labels associated with the two regions, the semantic labels indicating respective types of image content; and
generate representations of the respective types of image content for the two regions of the substantially photorealistic image.

**17.** The system of claim 15 or 16, wherein the instructions when executed further cause the system to:

receive a boundary input separating an image space into the two regions;
receive indication of semantic labels to be associated with the two regions; and
generate the semantic layout representing the two regions with the semantic labels.

**18.** The system of any of claims 15 to 17, wherein the at least one spatially-adaptive normalization layer is a conditional layer configured to propagate semantic information from the semantic layout throughout other layers of the neural network.

**19.** The system of claim 18, wherein the instructions when executed further cause the system to: modulate, by the spatially-adaptive normalization layer, a set of activations through a spatially-adaptive transformation in order to propagate the semantic information throughout the other layers of the neural network.

**20.** The system of any of claims 15 to 19, wherein the instructions when executed further cause the system to:

normalize, by the spatially-adaptive normalization layer, layer activations to zero mean; and
de-normalize the normalized layer activations to modulate activation using an affine transformation.

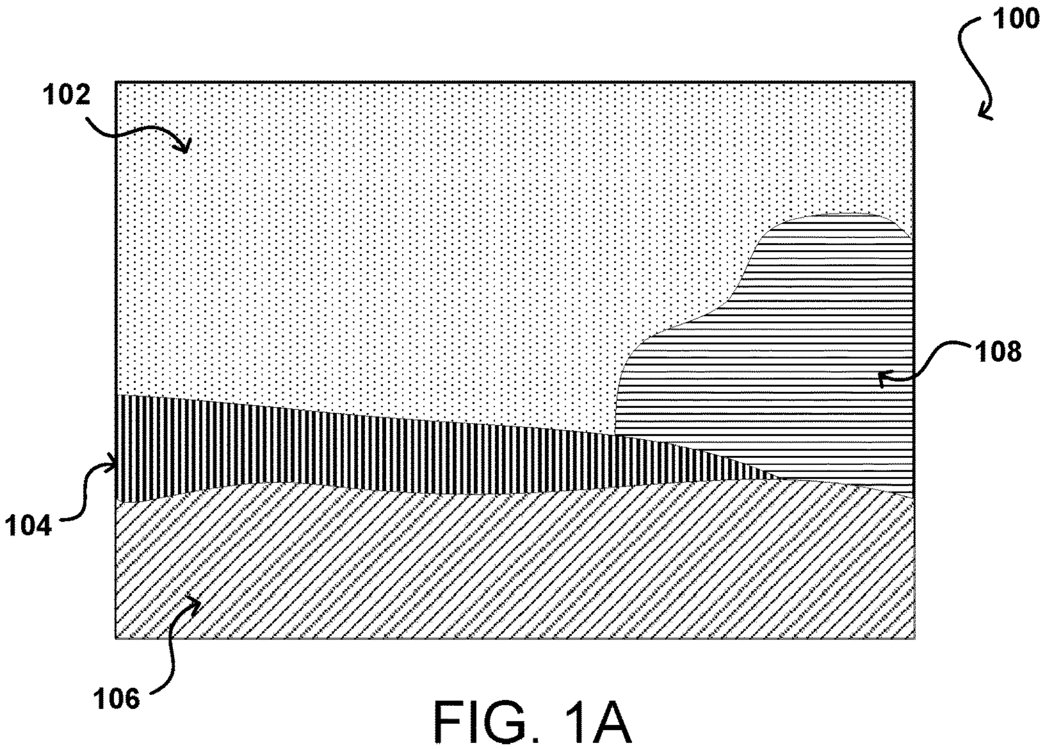


FIG. 1A

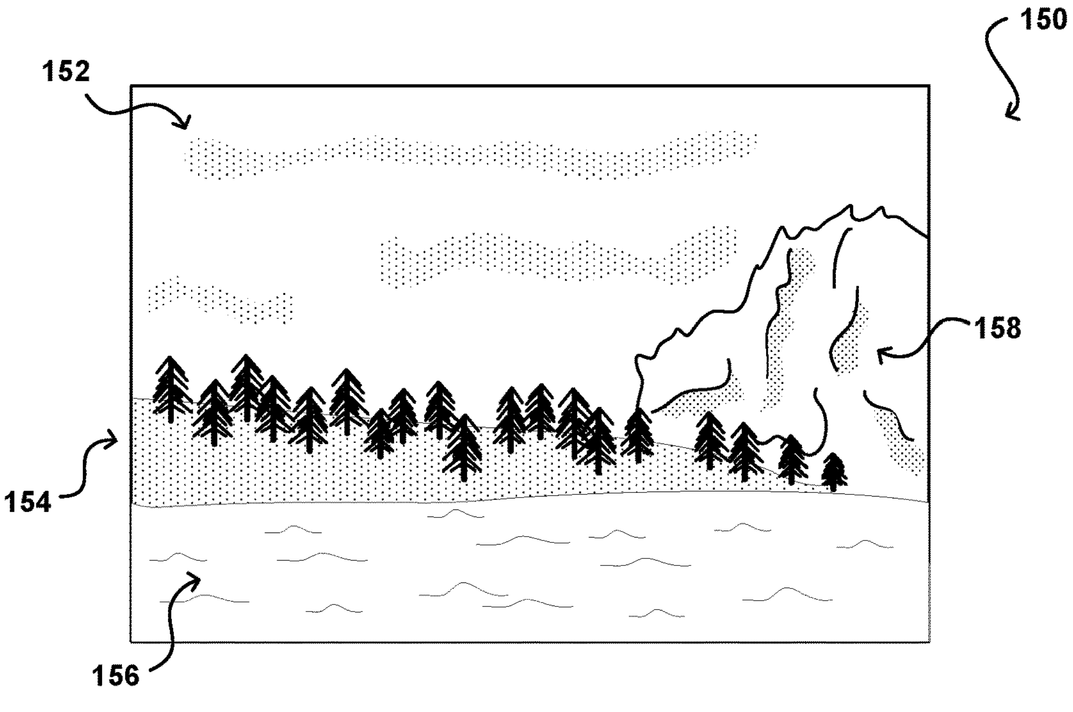


FIG. 1B

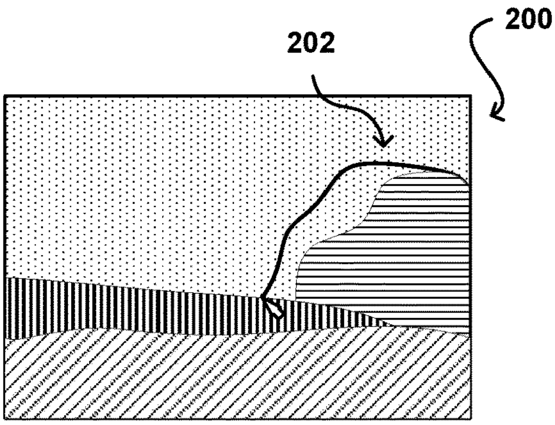


FIG. 2A

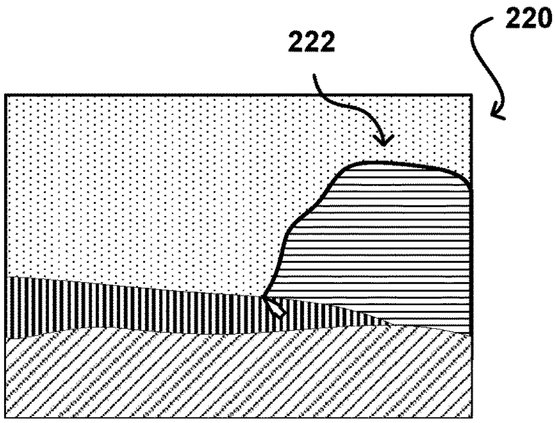


FIG. 2B

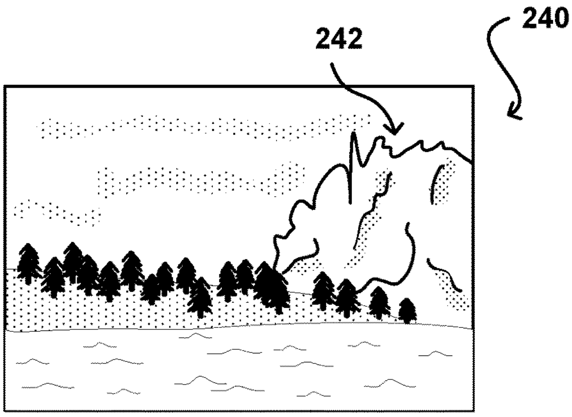


FIG. 2C

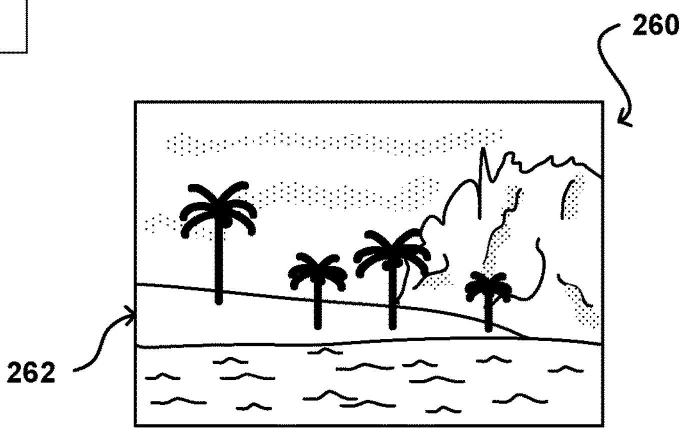


FIG. 2D

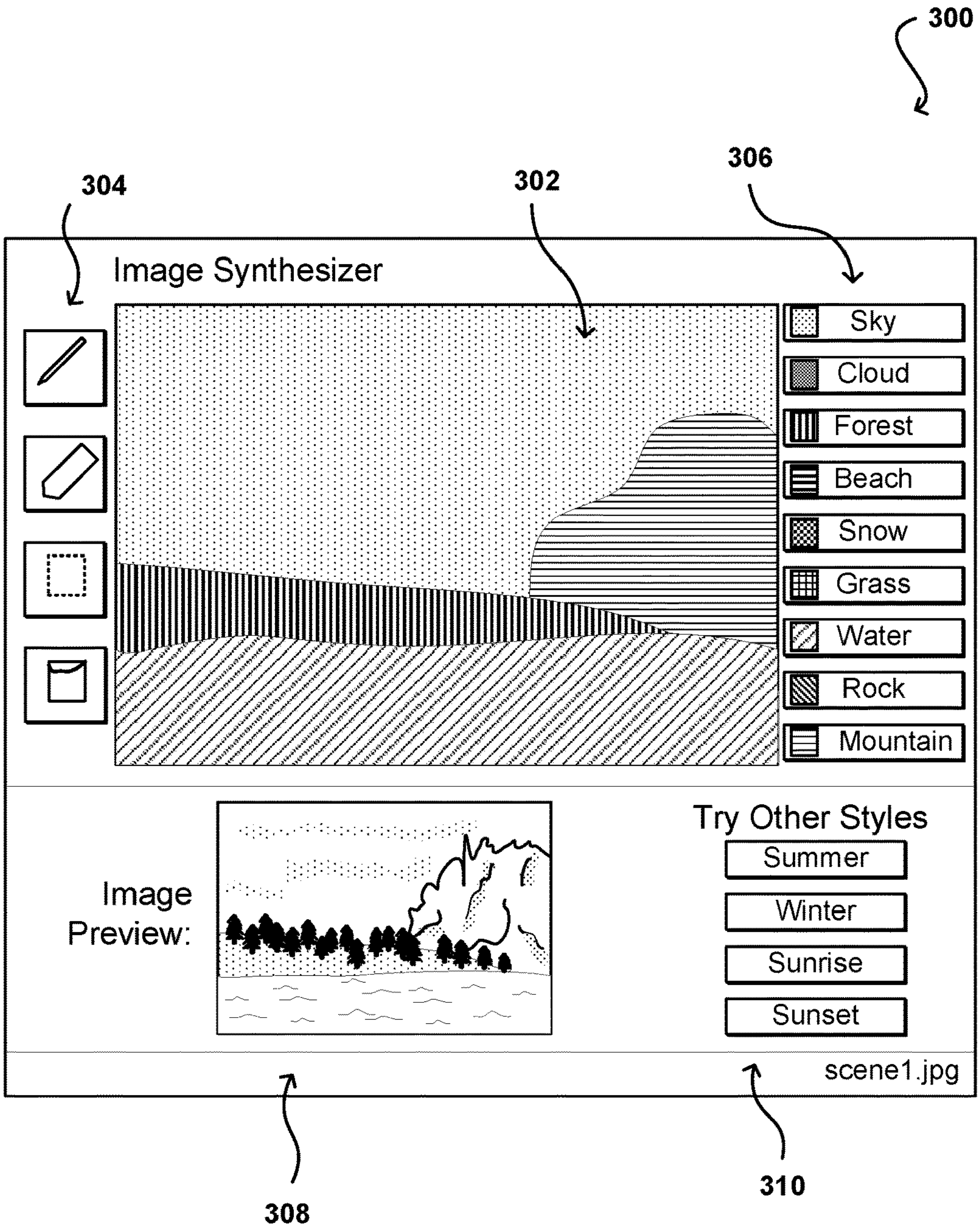
300
304
302
306
Image Synthesizer
Sky
Cloud
Forest
Beach
Snow
Grass
Water
Rock
Mountain
Image Preview:
Try Other Styles
Summer
Winter
Sunrise
Sunset
scene1.jpg
308
310

FIG. 3

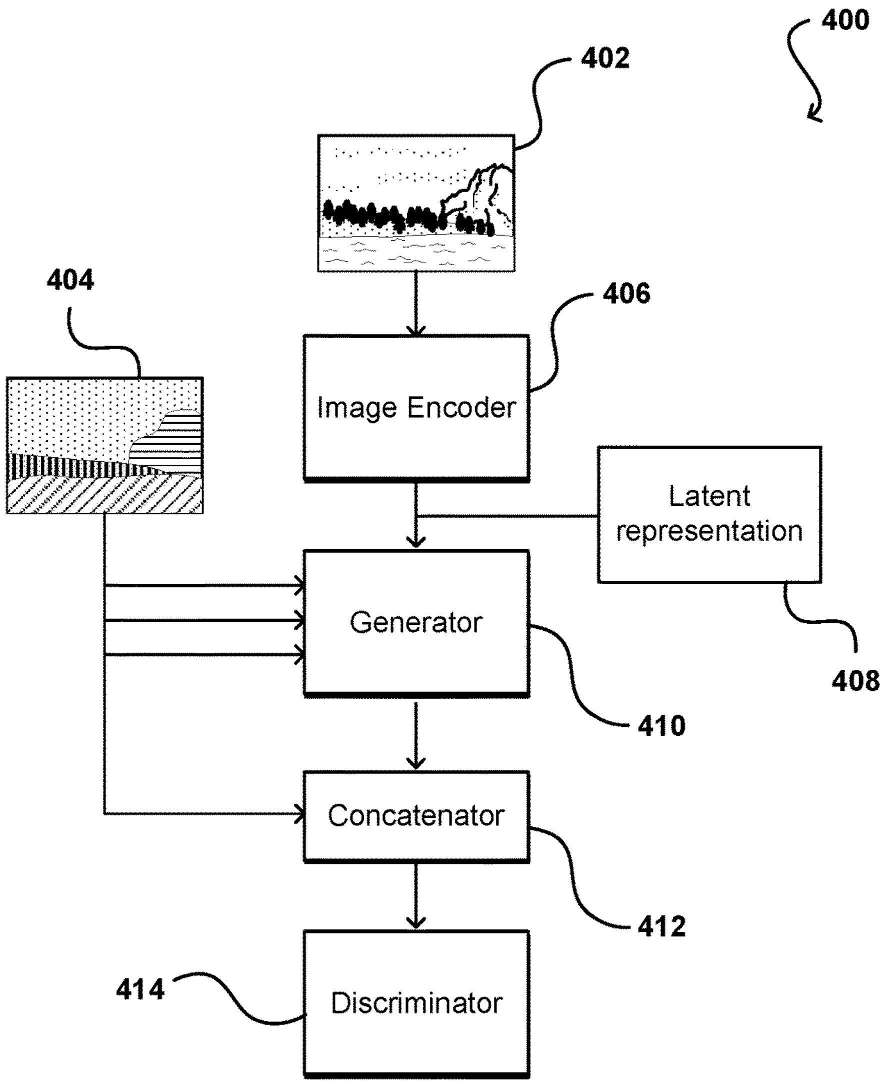
400
402
404
406
Image Encoder
Latent representation
408
Generator
410
Concatenator
412
414
Discriminator

FIG. 4

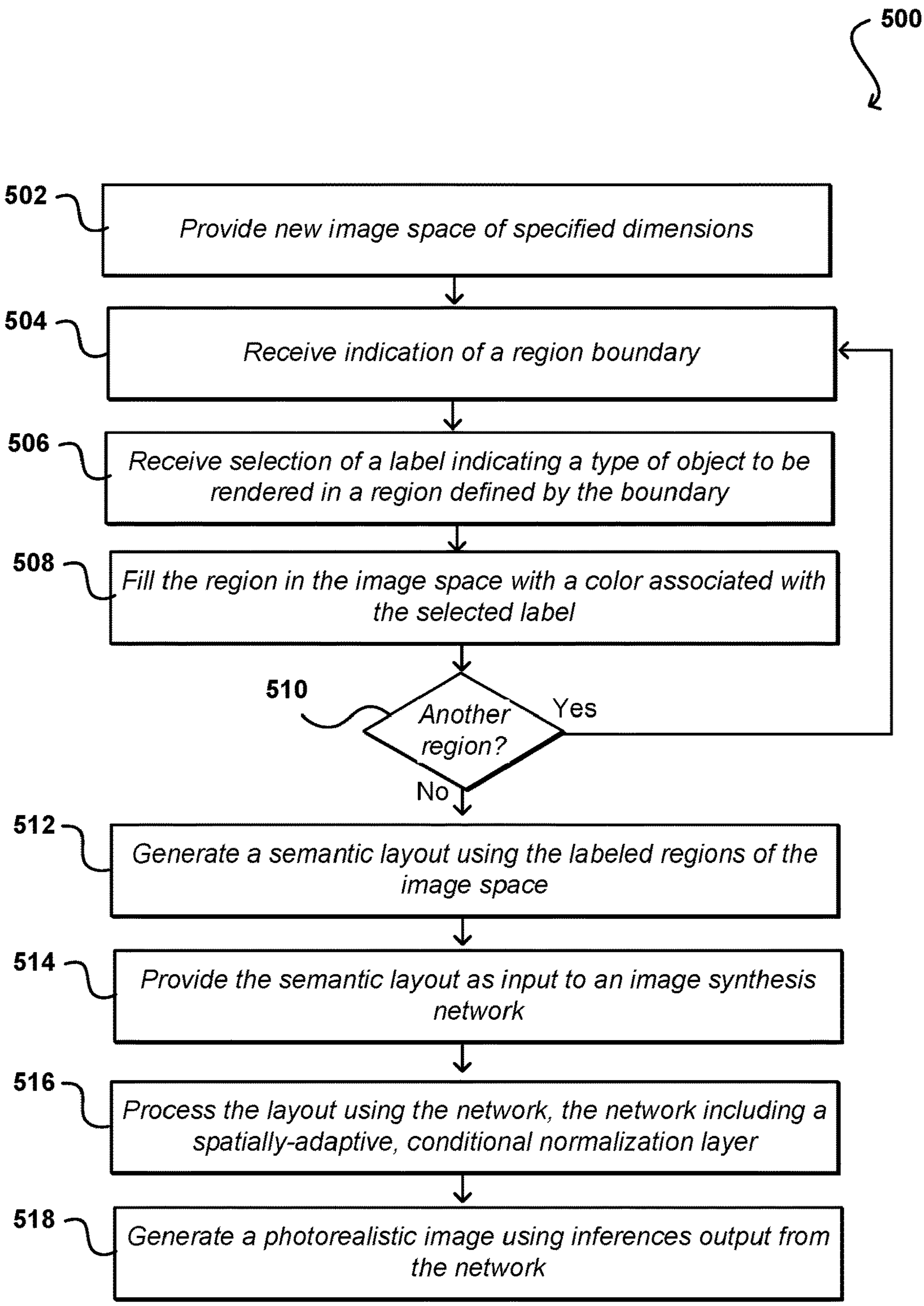
500
502
Provide new image space of specified dimensions
504
Receive indication of a region boundary
506
Receive selection of a label indicating a type of object to be rendered in a region defined by the boundary
508
Fill the region in the image space with a color associated with the selected label
510
Another region?
Yes
No
512
Generate a semantic layout using the labeled regions of the image space
514
Provide the semantic layout as input to an image synthesis network
516
Process the layout using the network, the network including a spatially-adaptive, conditional normalization layer
518
Generate a photorealistic image using inferences output from the network

FIG. 5

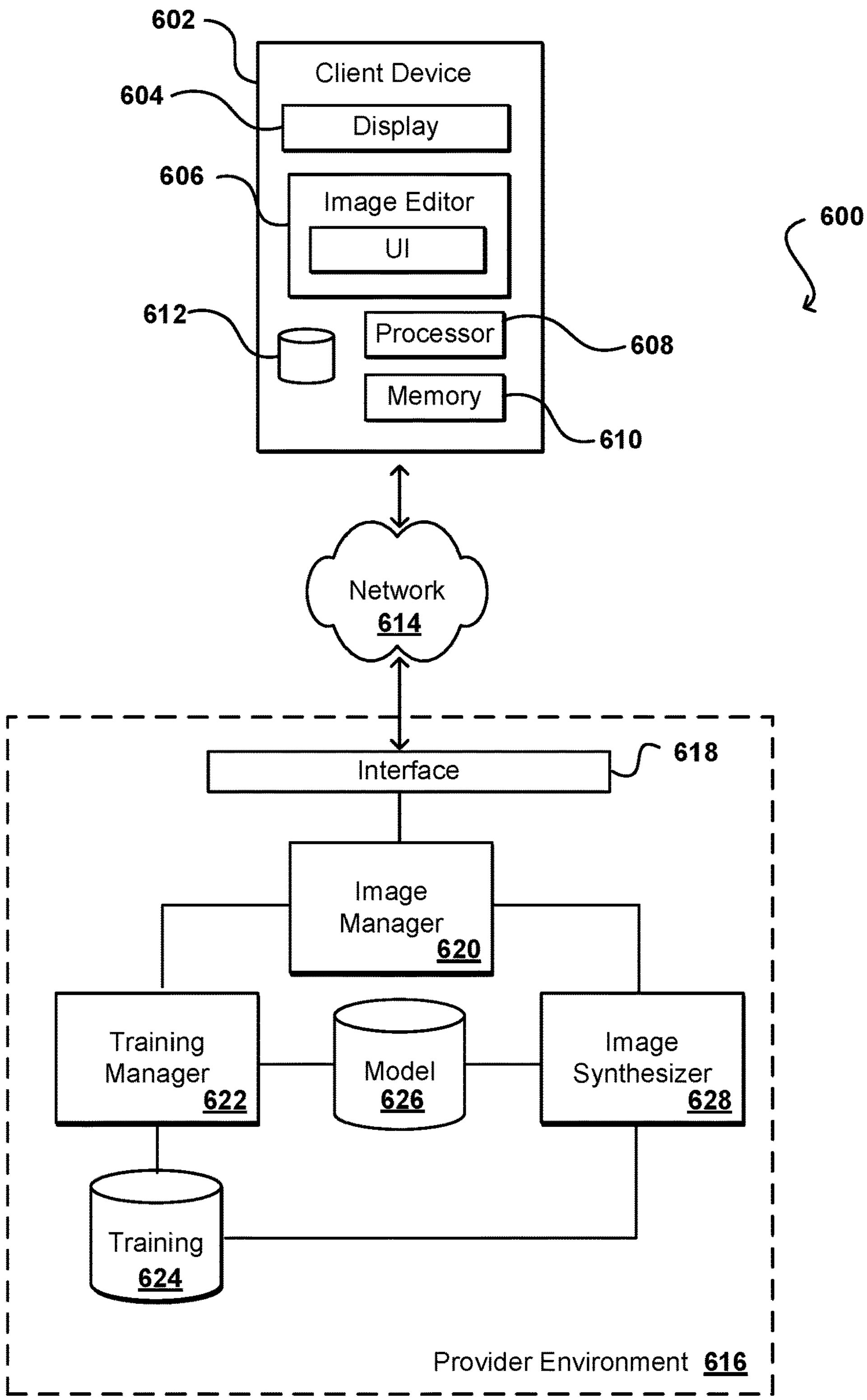
602
Client Device
604
Display
606
Image Editor
UI
612
Processor
608
Memory
610
600
Network
614
Interface
618
Image
Manager
620
Training
Manager
622
Model
626
Image
Synthesizer
628
Training
624
Provider Environment 616

FIG. 6

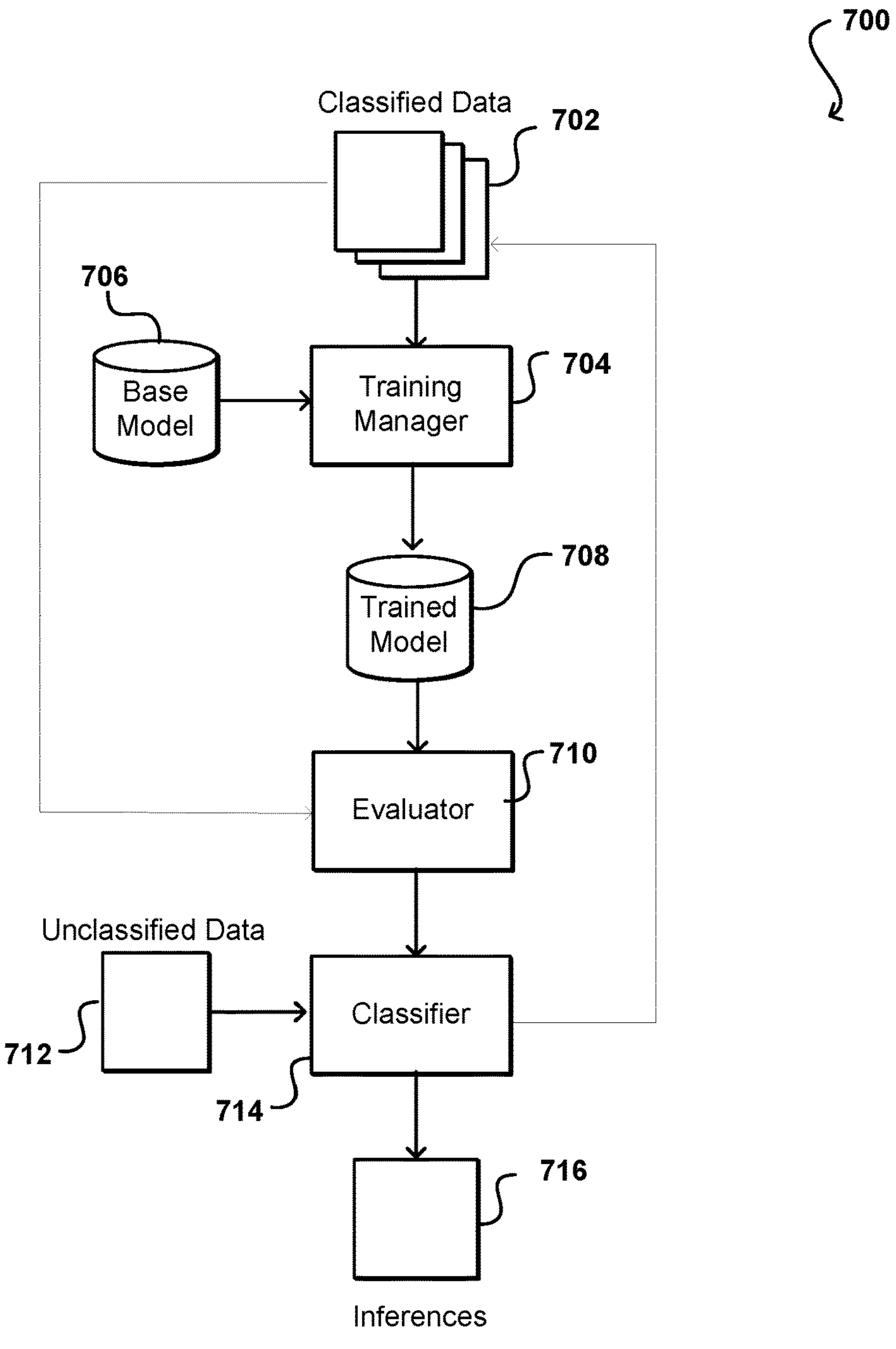
700
Classified Data
702
706
Base Model
Training Manager
704
708
Trained Model
710
Evaluator
Unclassified Data
Classifier
712
714
716
Inferences

FIG. 7

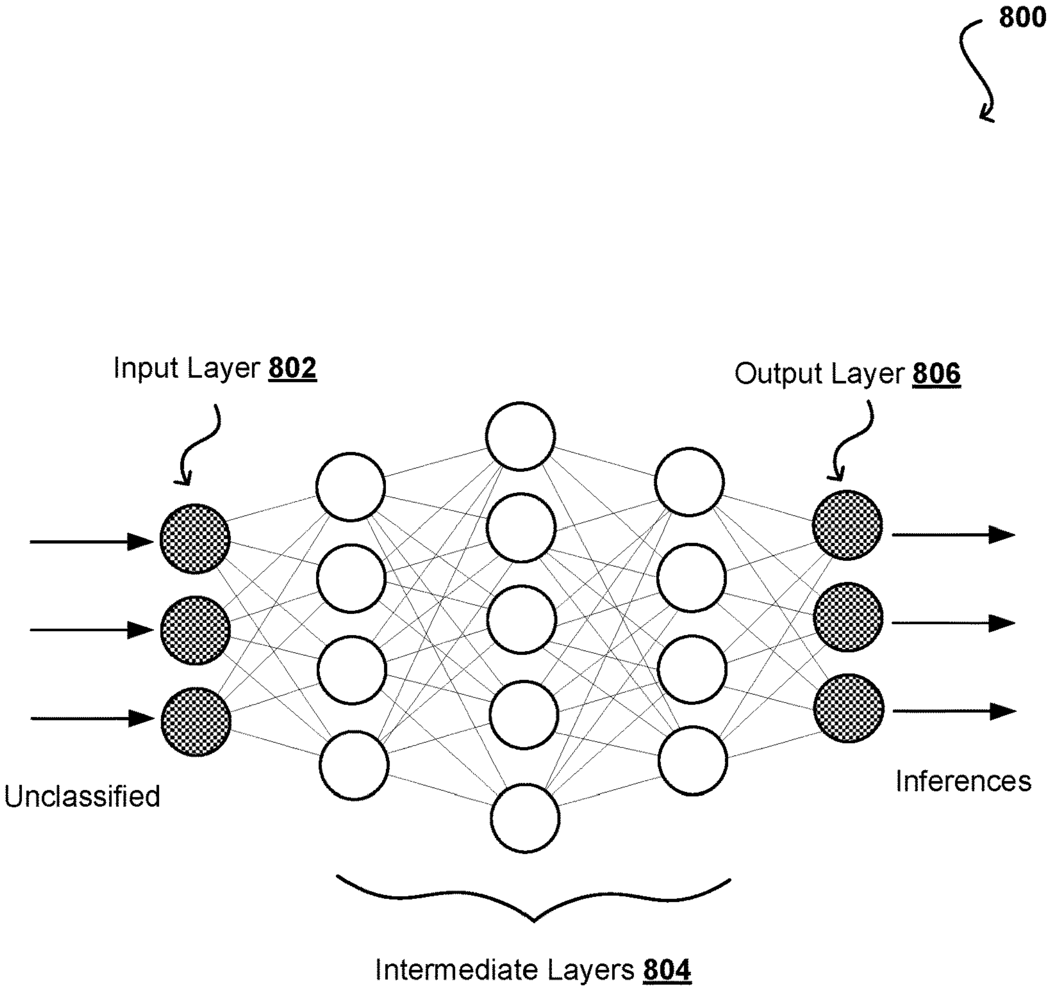
800
Input Layer 802
Output Layer 806
Unclassified
Inferences
Intermediate Layers 804

FIG. 8

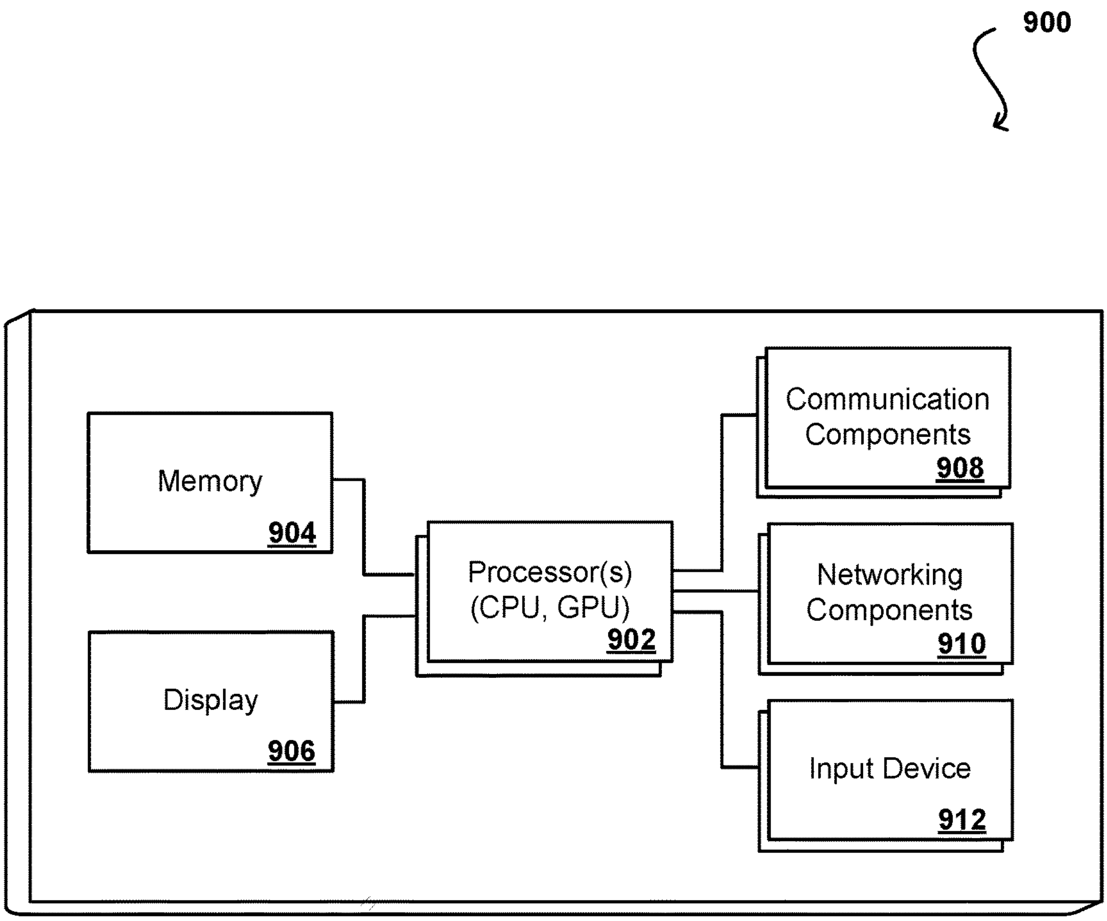
900
Memory
904
Display
906
Processor(s)
(CPU, GPU)
902
Communication
Components
908
Networking
Components
910
Input Device
912

FIG. 9

Europäisches Patentamt
European Patent Office
Office européen des brevets

# EUROPEAN SEARCH REPORT

Application Number
EP 19 21 7022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br><br>A | RYOHEI SUZUKI ET AL: "Collaging on Internal Representations: An Intuitive Approach for Semantic Transfiguration", ARXIV.ORG, CORNELL UNIVERSITY LIBRARY, 201 OLIN LIBRARY CORNELL UNIVERSITY ITHACA, NY 14853,<br>26 November 2018 (2018-11-26), XP081041097,<br>* Sec. 3, l. 4-8 and Sec. 3.1, l. 1-10.<br>Sec. 4, subsection Semantic transplantation, 1st paragraph, l. 13-15.<br>Sec. 4.1, 1st paragraph until Eq. (1).<br>Sec. 3.1, l. 7-10.<br>Fig. 3.<br>Sec. 4, subsection Semantic transplantation, 1st paragraph, l. 5-8.<br>Sec. 4.1, l. 10-12 and the 5 lines after Fig. 10 on p. 6.<br>Sec. 5.1, l. 1-2. *<br>----- | 1,2,<br>4-11,<br>14-19<br><br><br><br><br><br>3,12,13,<br>20 | INV.<br>G06T11/00<br>G06T11/60 |
| X | Eric Risser ET AL: "Stable and Controllable Neural Texture Synthesis and Style Transfer Using Histogram Losses",<br>,<br>30 January 2017 (2017-01-30), pages 1-14, XP055511182,<br>Retrieved from the Internet:<br>URL:https://arxiv.org/pdf/1701.08893.pdf<br>[retrieved on 2018-09-28]<br>* Sec. 5.2, 4th paragraph, l. 8-11 and Sec. 6, 3rd paragraph, l. 1-6.<br>Sec. 5.2, 4th paragraph, l. 1-5.<br>Fig. 7. *<br>----- | 1-3,<br>5-13,<br>15-20 | TECHNICAL FIELDS SEARCHED (IPC)<br>G06T |

1

The present search report has been drawn up for all claims

| Place of search | Date of completion of the search | Examiner |
|---|---|---|
| Munich | 20 April 2020 | Nicolau, Stephane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)